# EUROPEAN PATENT APPLICATION

(11) **EP 4 543 010 A1**
(43) Date of publication of application: **23.04.2025**
(21) Application number: 23823216.9
(22) Date of filing: 15.06.2023
(51) Int. Cl.: H04N 21/2187, G06F 16/735

(54) **PUSH PROCESSING METHOD AND APPARATUS, AND DEVICE AND MEDIUM**

(30) Priority: 15.06.2022 CN 202210682129
(71) Applicant: BEIJING YOUZHUJU NETWORK TECHNOLOGY CO. LTD., Beijing 101299 (CN)
(72) Inventor: LI, Liya, Beijing 100028 (CN); ZHANG, Mengying, Beijing 100028 (CN); WANG, Li, Beijing 100028 (CN); XIE, Zhiyao, Beijing 100028 (CN)
(74) Representative: Dentons UK and Middle East LLP
(86) International application number: PCT/CN2023/100408
(87) International publication number: WO 2023/241650

(57) **Abstract**

The embodiments of the present disclosure relate to a push processing method and apparatus, and a device and a medium. The method comprises: if candidate push objects associated with the current live broadcast video include a second push object, which matches a first push object, displaying push information in a live broadcast interface of the current live broadcast video, wherein the push information is used for prompting that the current live broadcast video includes the second push object associated with the first push object, and the first push object is determined according to historical viewed videos; and if the push information meets a preset trigger condition, displaying, in the live broadcast interface, a push page for the second push object.

## Description

### CROSS-REFERENCE TO RELATED APPLICATIONS

The present application is based on and claims priority to Chinese Application No. 202210682129.X filed on Jun. 15, 2022, the disclosure of which is incorporated by reference herein in its entirety.

### TECHNICAL FIELD

The present disclosure relates to the field of computer application technologies, and in particular a push processing method and apparatus, a device, and a medium.

### BACKGROUND

With the rise of short video applications, it is more and more common to push items based on videos as carriers.

In the related art, if a user is interested in a certain push object A when viewing a certain short video, then the user needs to enter a live room of the same account corresponding to the short video, and actively search for and view the push object A in the live object list in the live room so as to view the relevant information of A.

### SUMMARY

The present disclosure provides a push processing method and apparatus, a device, and a medium. After a first push object that a user is interested in is determined based on a historical viewed video, a second push object associated with the first push object is pushed in a current live video.

An embodiment of the present disclosure provides a push processing method, which comprises: if candidate push objects associated with a current live video include a second push object matched with a first push object, displaying push information on a live interface of the current live video; wherein the push information is used to indicate that the current live video includes the second push object associated with the first push object, and the first push object is determined according to a historical viewed video; if the push information meets a preset trigger condition, displaying a push page of the second push object on the live interface.

An embodiment of the present disclosure also provides a push processing apparatus, which comprises: a first display module for displaying, if candidate push objects associated with a current live video include a second push object matched with a first push object, push information on a live interface of the current live video, wherein the push information is used to indicate that the current live video includes the second push object associated with the first push object, and the first push object is determined according to a historical viewed video; a second display module for displaying, if the push information meets a preset trigger condition, a push page of the second push object on the live interface.

An embodiment of the present disclosure also provides an electronic device, which comprises: a processor; a memory for storing instructions executable to the processor; wherein the processor is used for reading the executable instructions from the memory and executing the instructions so as to implement the push processing method provided by the embodiment of the present disclosure.

An embodiment of the present disclosure also provides a computer readable storage medium storing a computer program which is used for executing the push processing method provided by the embodiment of the present disclosure.

An embodiment of the present disclosure also provides a computer program product comprising a computer program which, when executed by a processor, implements the push processing method provided by the embodiment of the present disclosure.

An embodiment of the present disclosure also provides a computer program, comprising: instructions which, when executed by a processor, cause the processor to execute the push processing method provided by the embodiment of the present disclosure.

### BRIEF DESCRIPTION OF THE DRAWINGS

The above and other features, advantages and aspects of embodiments of the present disclosure will become more apparent by referring to the following specific implementations when taken in conjunction with the accompanying drawings. Throughout the drawings, the same or similar reference numerals indicate the same or similar elements. It should be understood that the drawings are schematic, and the original and elements are not necessarily drawn to scale.
Fig. 1 is a schematic flow diagram of a push processing method provided by an embodiment of the present disclosure;
Fig. 2 is a schematic diagram of a push processing scene provided by an embodiment of the present disclosure;
Fig. 3A is a schematic diagram of push information provided by an embodiment of the present disclosure;
Fig. 3B is a schematic diagram of another push information provided by an embodiment of the present disclosure;
Fig. 4A is a schematic diagram of a display scene of a push page provided by an embodiment of the present disclosure;
Fig. 4B is a schematic diagram of a display scene of another push page provided by an embodiment of the present disclosure;
Fig. 5A is a schematic diagram of a display scene of another push page provided by an embodiment of the present disclosure;
Fig. 5B is a schematic diagram of a display scene of another push page provided by an embodiment of the present disclosure;
Fig. 6 is a schematic diagram of a display scene of push tag information provided by an embodiment of the present disclosure;
Fig. 7 is a schematic flow diagram of another push processing method provided by an embodiment of the present disclosure;
Fig. 8 is a schematic flow diagram of another push processing method provided by an embodiment of the present disclosure;
Fig. 9A is a schematic diagram of another push processing scene provided by an embodiment of the present disclosure;
Fig. 9B is a schematic diagram of another push processing scene provided by an embodiment of the present disclosure;
Fig. 10 is a schematic structural diagram of a push processing apparatus provided by an embodiment of the present disclosure;
Fig. 11 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be implemented in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method implementations of the present disclosure can be executed in a different order and/or in parallel. Furthermore, the method implementations can include additional steps and/or omit executing the illustrated steps. The scope of the present disclosure is not limited in this respect.

As used herein, the term "including" and its variants are open-ended including, that is, "including but not limited to". The term "based on" is "at least partially based on". The term "one embodiment" means "at least one embodiment"; the term "another embodiment" means "at least one other embodiment"; the term "some embodiments" means "at least some embodiments". Related definitions of other terms will be given in the following description.

It should be noted that the concepts such as "first" and "second" mentioned in the present disclosure are only used to distinguish different means, modules or units, and are not used to limit the order or interdependence of the functions executed by these means, modules or units.

It should be noted that the modifications of "a" and "a plurality of" mentioned in the present disclosure are schematic rather than limiting, and those skilled in the art should understand that unless the context clearly indicates otherwise, they should be understood as "one or a plurality of".

Names of messages or information exchanged among a plurality of means in the implementations of the present disclosure are only used for illustrative purposes, and are not used to limit the scope of these messages or information.

At present, in the method of viewing push object information, users need to actively search and view a push object in a live object list, and the path for users to find the searched push object is long.

In order to solve the above problem, an embodiment of the present disclosure provides a push processing method, which will be introduced in the following with a specific embodiment.

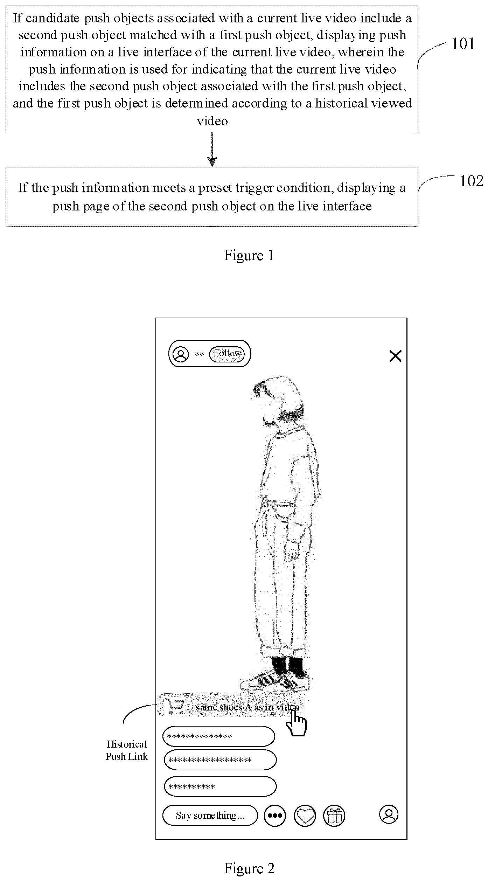

Fig. 1 is a schematic flow diagram of a push processing method provided by an embodiment of the present disclosure. The method can be executed by a push processing apparatus, which can be implemented by software and/or hardware, and generally can be integrated into an electronic device. As shown in Fig. 1, the method includes:
Step 101, if candidate push objects associated with a current live video include a second push object matched with a first push object, then displaying push information on a live interface of the current live video, wherein the push information is used for indicating that the second push object associated with the first push object is contained in the current live video, and the first push object is determined according to a historical viewed video.

In one embodiment of the present disclosure, the first push object is determined according to the historical viewed video, wherein the first push object can be understood as a recommended object that the user is interested in, which is determined based on the historical viewed video. The first push object includes but is not limited to food, clothes, kitchen supplies, and etc.

It should be noted that, in an actual execution process, the historical viewed video corresponds to different videos in different application scenes. Thus, there are different ways to determine the first push object according to the historical viewed video.

In one embodiment of the present disclosure, the historical viewed video includes a historical live video, that is, the historical viewed video is any live video that the user has viewed before, so the first push object that the user is interested in can be screened out through the user's viewing behavior on the live videos.

In the embodiment of the present disclosure, in order to distinguish whether the user has transitorily "swiped" the historical live video or is really interested in the historical live video, a playing duration of the historical live video can be measured. If the playing duration is greater than a preset viewing duration, then a historical push object corresponding to the historical live video is determined as the first push object, wherein the preset viewing duration can be determined according to a total playing duration of the historical live video, for example, the product of the total playing duration and a preset percentage can be determined as the preset viewing duration, or a fixed value can be determined according to needs of the scene as the preset viewing duration. In addition, the above historical push object can be understood as a push object on a live in the historical live video, and etc. when the user is viewing the historical live video.

In one embodiment of the present disclosure, if the historical viewed video includes a historical push video, wherein the historical push video is a certain intercepted segment of the recommended video of the live video, then in the present embodiment, it is possible to judge that the historical viewed video contains a historical push link of an associated historical push object, wherein the historical push link is used for linking to detail information and the like of the historical push object in the corresponding live video, which can be understood as a link of the historical push object displayed on a video interface of the historical push video under the "trailer" recommended scene for the push object in the related art. In some embodiments, "trailer" can refer to displaying a display object (e.g., a picture, name, etc. of the push object) associated with a push object on a video interface. By selecting (e.g., clicking) the display object, a link associated with the push object can be opened (e.g., jumping to a detail page corresponding to the push object).

For example, as shown in Fig. 2, if the historical push link corresponding to the historical push video is a push link for shoes A, then the push link of shoes A is displayed on the video interface of the historical push video.

In the present embodiment, it is detected whether a trigger operation on the historical push link is acquired, and the trigger operation can be a click operation, etc. If the trigger operation on the historical push link is acquired, then it indicates that the user is interested in the historical push object, and thus the historical push object corresponding to the historical push video is determined as the first push object.

In the embodiment of the present disclosure, it is detected whether a display request for the historical push page is acquired, wherein the historical push page contains push detail information of the historical push object associated with the historical viewed video. The way for requesting display of the historical push page can refer to a subsequent display request operation on the push page of the second push object, which is not described here again. The push detail information of the historical push object includes but is not limited to the price, size, order placing link and the like of the historical push object, and the specific push detail information can be set according to needs of the scene, which is not limited here.

If a display operation for the historical push page is detected, then it is considered that the user is interested in the historical push object, and thus the historical push object corresponding to the historical push video is determined as the first push object.

It should be noted that the current live video can be a live video of a live account that is subsequently viewed by the user and different from the account of the historical viewed video, or it can be a live video of the same live account as the historical viewed video.

In one embodiment of the present disclosure, if the first push object is determined based on the historical push video, then it is possible to enter the current live video corresponding to the historical push video in response to a viewing operation on the historical push video, for example, a click by the user on the historical push video, wherein the historical push video is a traffic pulling video of the current live video (that is, a video for guiding the user to jump to a video interface for playing the current live video), the historical push video is the recommended short video of the current live video, and the historical push video and the current live video belong to the same live account.

Furthermore, since the current live video contains push detail information corresponding to the first push object and etc., a relevant push processing is subsequently performed in the current live video, thus realizing an efficient continuity from determining the push object to displaying the push page of the push object.

In one embodiment of the present disclosure, it is determined whether candidate push objects associated with the current live video include a second push object matched with a first push object, wherein the candidate push objects associated with the current live video can be all push objects corresponding to the current live video, for example, all objects in the live list, including all objects in the live list that have been pushed, being pushed and have not been pushed.

Further, if candidate push objects associated with the current live video include a second push object matched with a first push object, then push information is displayed on the live interface of the current live video, so as to indicate to the user based on the push information that the current live video frame contains the push object that the user is interested in. Thus, the user does not need to actively search for the corresponding first push object, and the search path is shortened.

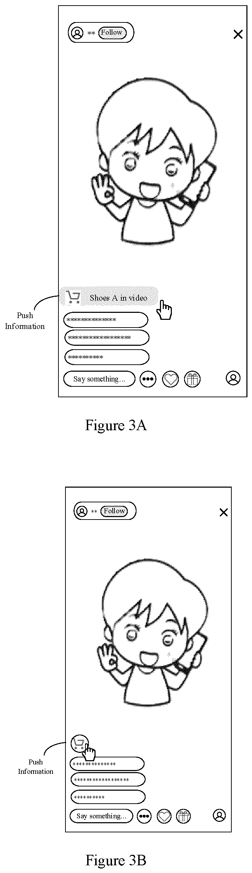

The push information can be a page link, or the like, of the push page of the second push object. In different application scenes, there are different forms of push information. For example, it can be a text form as shown in Fig. 3A (the second push object in the figure is shoes A), or for example, it can be a floating icon as shown in Fig. 3B, etc. If the push information meets the subsequent trigger condition, then the corresponding push page is displayed on the current live interface in a half-screen mode. Alternatively, the push information can be buried point information of the push page of the second push object, and if the push information meets the subsequent trigger condition, it can jump to the push page of the second push object. Step 102, if the push information meets a preset trigger condition, then a push page of the second push object is displayed on the live interface.

In one embodiment of the present disclosure, after the current live video is entered, the corresponding live video is played instead of directly displaying the push page. Thus, on one hand, the viewing experience of the user on the current live video can be guaranteed, and on the other hand, it facilitates the user to know about and generate interest in the current push object of the current live video. Whether the push information meets the preset trigger condition is detected. That is, in the present embodiment, the push page can be further displayed if only it is detected that the preset trigger condition is met.

It should be noted that in different application scenes, there are different ways to detect whether the push information meets the preset trigger condition. Examples are as follows.

In some possible embodiments, the display duration of the push information is measured. When the display duration reaches a preset duration, if no trigger operation on the push information is detected, then the push information meets the trigger condition, wherein the preset duration can be calibrated according to the needs of the scene, for example, the preset duration can be 5S. In the present embodiment, in order to improve the intelligence of continuity, when the display duration reaches the preset duration, even if no trigger operation on the push information is detected, it is also considered that the push information meets the trigger condition.

Certainly, in one embodiment of the present disclosure, when the display duration has not reached the preset duration, if the trigger operation on the push information is detected, then the push information meets the trigger condition, so as to satisfy the user's viewing demand for the push page of the second push object.

In some possible embodiments, if the trigger operation on the push information is detected, then the push information meets the trigger condition. That is, in the present embodiment, in order to balance the user's viewing of the current live video and the continuous push for the second push object, the user can select actively whether to display the push page of the second push object. If it is detected that the user triggers the push information, then the corresponding push page is displayed; otherwise, the corresponding push page is not displayed, so as to prevent the user's viewing of the current live video from being interrupted.

In one embodiment of the present disclosure, if the preset trigger condition is met, then the push page of the second push object is displayed on the live interface, so that the user can know the detail information of the second push object, etc., wherein the push page of the second push object can include an object detail page of the second push object, and the object detail page contains the push detail information of the second push object. For example, if the second push object is shoes A, then the corresponding push detail information includes the shoe name, promotional information, price information, purchase link and etc. of shoes A. The push page of the second push object can also include a presentation page of the to-be-presented object corresponding to the current live video, and the presentation page can be in any form such as a list form, which is not listed here. In the present embodiment, the presentation page includes the second push object, and certainly, the presentation page can also include other to-be-presented object, which is not limited here.

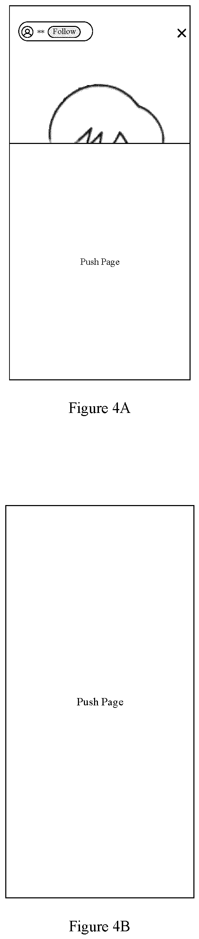

In the actual execution process, the display way of the push page of the second push object can be set according to the needs of the scene. In some possible embodiments, as shown in Fig. 4A, the display area of the push page on the current live interface can be determined. The display area can occupy part of the interface area of the current live interface, that is, it can be located in the lower half part of the current live interface, or located in the upper half part of the current live interface. The push page is displayed on the display area.

In some other possible embodiments, as shown in Fig. 4B, it is also possible to jump to the push page of the second push object after the preset trigger condition is met, so that only the corresponding push page can be seen on the current live interface.

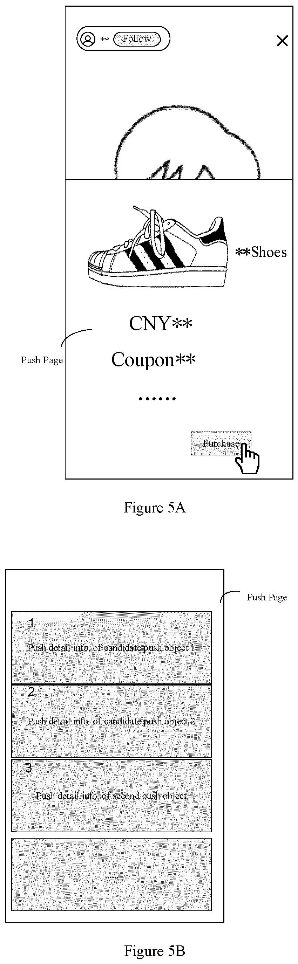

In addition, in different application scenes, there are different ways to display the corresponding push detail information in the push page of the second push object. For example, as shown in Fig. 5A, only the push detail information of the second push object can be displayed. For example, as shown in Fig. 5B, an sequential position of the second push object among the candidate push objects can be determined (the sequential position can be determined according to the push time, or can be manually set by a live streamer or other user). A list page containing the push detail information of the second push object is displayed in the form of a list as a push page, wherein the push page contains not only the push detail information of the second push object, but also the push detail information of other candidate push objects adjacent to the second push object. Thus, users can not only perform a purchase or other operations on the second push object on the push page, but also perform a purchase or other operations on other candidate push objects.

In some possible embodiments, in order to further improve the push experience of the second push object, preset push tag information can also be displayed in an area where the second push object is located on the push page, wherein the area where the second push object is located can be set according to the scene; the push tag information is used for identifying a historical browsing behavior on the first push object, and the push tag information can be in one or more of animation form, text form, pattern form, and etc.

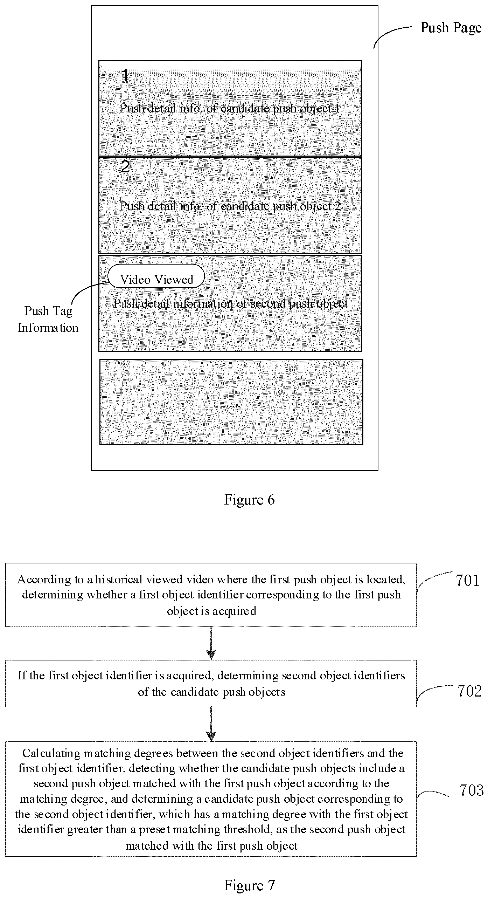

For example, as shown in Fig. 6, if the push tag information is in the text form, a text tag of "video viewed" can be displayed in the upper left corner of the area where the second push object is located, so that it facilitates the user to know the second push object matched with the first push object he viewed in the historical viewed video. In some possible embodiments, it is possible to display the push tag information all the time, or stop displaying the push tag information after displaying the push tag information for a preset duration. For example, if the push tag information covers an originally presented serial number of the second push object, then it is possible to stop displaying the push tag information after a preset duration, for example, after 2S, and resume displaying the serial number of the second push object.

To sum up, according to the push processing method of the embodiment of the present disclosure, when a second push object matched with a first push object is contained among candidate push objects associated with a current live video, push information is displayed on a live interface of the current live video, wherein the push information is used for indicating that the second push object associated with the first push object is contained in the current live video, and the first push object is determined according to a historical viewed video; if the push information meets a preset trigger condition, then a push page of the second push object is displayed on the live interface. Thus, after the first push object that the user is interested in is determined based on the historical viewed video, the second push object associated with the first push object is pushed in the current live video, which shortens the push path and realizes an efficient continuity of a related push object from being determined to being pushed.

Based on the above embodiments, it is necessary to incorporate the second push object matched with the first push object into the candidate push objects associated with the current live video, and the association degree between the second push object and the first push object is very important for the push effect.

The following describes how to incorporate the second push object matched with the first push object into the candidate push objects associated with the current live video with reference to an embodiment.

In one embodiment of the present disclosure, as shown in Fig. 7, incorporating the second push object matched with the first push object into the candidate push objects associated with the current live video includes:
Step 701: according to a historical viewed video where the first push object is located, determining whether a first object identifier corresponding to the first push object is acquired.

It can be understood easily that, for some historical viewed videos, the historical viewed video itself is associated with a first object identifier of a first push object. The first object identifier includes but is not limited to identifier information for locating the first push object, such as an object name of the first push object, and the like. For example, if there is a first push object of a "trailer" in the historical viewed video, then push link information of the first push object of the "trailer" can be acquired as the first object identifier. According to some embodiments of the present disclosure, the first object identifier includes at least one of the following: the object name of the first push object and the push link information of the first push object.

Step 702: if the first object identifier is acquired, then determining a second object identifier of the candidate push object.

In one embodiment of the present disclosure, if the first object identifier is acquired, for example, the historical viewed video is a "trailer" video, then the first object identifier can be acquired. In order to determine whether the second push object corresponding to the first push object is contained among the candidate push objects, a second object identifier of the candidate push object is determined, wherein the second object identifier includes the same type of content as the first object identifier. According to some embodiments of the present disclosure, the second object identifier includes at least one of the following: the object name of the second push object and the push link information of the second push object.

Step 703, calculating a matching degree between the second object identifier and the first object identifier, detecting whether the candidate push objects include a second push object matched with the first push object according to the matching degree, and determining a candidate push object corresponding to the second object identifier, which has a matching degree with the first object identifier greater than a preset matching threshold, as the second push object matched with the first push object.

In one embodiment of the present disclosure, a matching degree between each second object identifier and the first object identifier is calculated, and whether the candidate push objects include the second push object matched with the first push object is detected according to the matching degree. That is, in the present embodiment, if there is a second object identifier with a matching degree greater than the preset matching threshold, then the candidate push object corresponding to the second object identifier with a matching degree greater than the preset matching threshold is determined as the second push object matched with the first push object.

In the embodiment of the present disclosure, if the preset matching threshold is 100%, then the determined second push object matched with the first push object is the first push object; if the preset matching threshold is less than 100%, then the determined second push object matched with the first push object can include the first push object or a candidate push object similar to the first push object. If the preset matching threshold is 100%, then a targeted push for the first push object can be guaranteed; if the preset matching threshold is less than 100%, a push result for the first push object can be expanded in that the determined second push object is a push object similar to the first push object, such as a push object of the same type, which can improve the push rate for other candidate push objects similar to the first push object. The preset matching threshold can be calibrated according to the needs of the scene, which is not limited here.

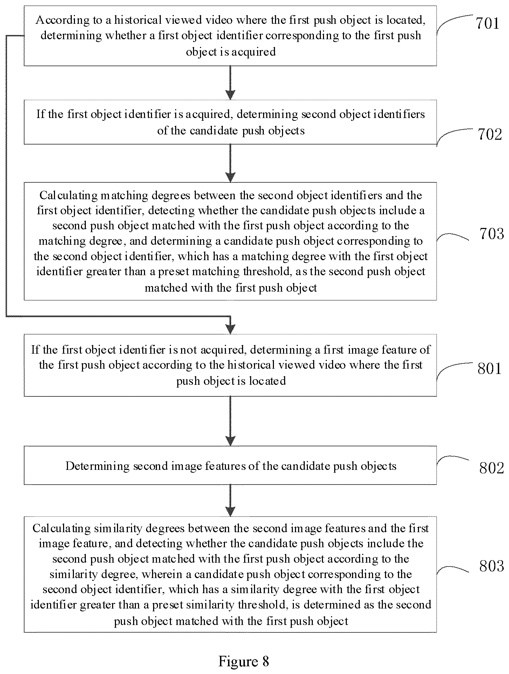

In one embodiment of the present disclosure, as shown in Fig. 8, on the basis of that shown in Fig. 7, after determining whether the first object identifier corresponding to the first push object is acquired, the method further includes:
Step 801, if the first object identifier is not acquired, then determining a first image feature of the first push object according to the historical viewed video where the first push object is located.

In one embodiment of the present disclosure, if the first object identifier is not acquired, that is, the historical viewed video may not be a "trailer" video, etc., then the first image feature of the first push object is determined according to the historical viewed video where the first push object is located. For example, image recognition processing is performed on the first push object in the historical viewed video frame based on an image recognition algorithm, and etc., so as to determine the first image feature of the first push object.

Step 802: determining a second image feature of the candidate push object.

It is possible to acquire the video frame where the candidate push object is located, and perform the image recognition processing on the video frame where the candidate push object is located based on an image recognition algorithm and etc., so as to determine the second image feature of the second push object.

Step 803,calculating a similarity degree between the second image feature and the first image feature, and detecting whether the candidate push objects include the second push object matched with the first push object according to the similarity degree, wherein a candidate push object corresponding to the second object identifier which has a similarity degree with the first object identifier greater than a preset similarity threshold is determined as the second push object matched with the first push object.

In the present embodiment, the similarity degree between the second image feature and the first image feature is calculated. For example, the second image feature and the first image feature are input into a preset image matching model so as to obtain the similarity degree between the second image feature and the first image feature, or an Euclidean distance between the second image feature and the first image feature is calculated so as to determine the similarity degree between the second image feature and the first image feature according to the Euclidean distance.

Further, whether the candidate push objects include the second push object matched with the first push object is detected according to the similarity degree, wherein a candidate push object corresponding to the second object identifier, which has a similarity degree with the first object identifier greater than a preset similarity threshold, is determined as the second push object matched with the first push object. That is, in the present embodiment, if there is a second image feature with a similarity degree greater than the preset similarity threshold, then a candidate push object corresponding to the second image feature with the similarity degree greater than the preset similarity threshold is determined as the second push object matched with the first push object.

In the embodiment of the present disclosure, if the preset similarity threshold is 100%, then the determined second push object similar to the first push object is the first push object; if the preset similarity threshold is less than 100%, then the determined second push object similar to the first push object can include the first push object or a candidate push object similar to the first push object. If the preset similarity threshold is 100%, then a targeted push for the first push object can be guaranteed; if the preset similarity threshold is less than 100%, a push result for the first push object can be expanded. The determined second push object is a push object similar to the first push object, such as a push object of the same type, which can improve the push rate for other candidate push objects similar to the first push object. The preset similarity threshold can be calibrated according to the needs of the scene, which is not limited here.

Certainly, in one embodiment of the present disclosure, it is also possible to directly determine the second image feature of the candidate push object, calculate the similarity degree between the second image feature and the first image feature, and detect whether the candidate push objects include the second push object matched with the first push object according to the similarity degree, wherein a candidate push object corresponding to the second object identifier, which has a similarity degree with the first object identifier greater than the preset similarity threshold, is determined as the second push object matched with the first push object.

In order to cause those skilled in the art to more clearly understand the push processing method of the embodiment of the present disclosure, a description is made in combination with a specific application scene as follows.

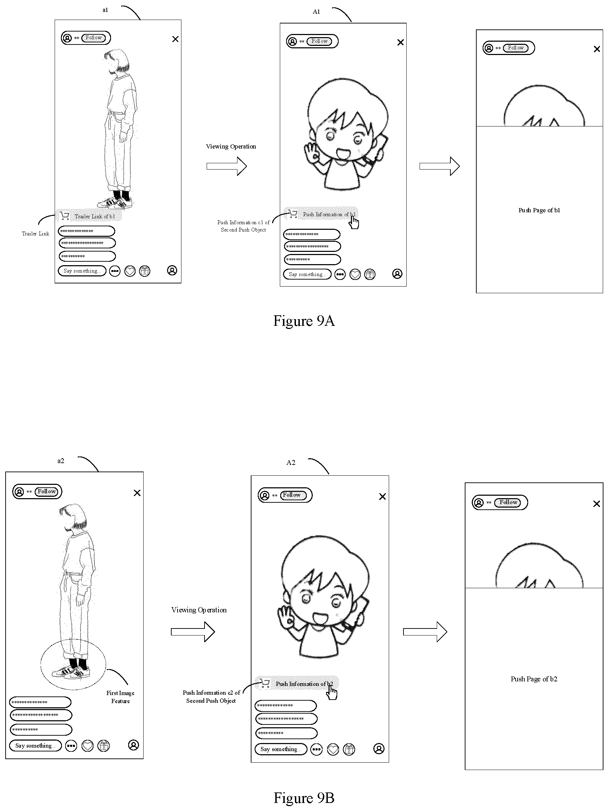

In one embodiment of the present disclosure, as shown in Fig. 9A, the historical viewed video is historical push video a1, which contains a trailer link of first push object b1, and the preset matching threshold is 100%. In the present embodiment, whether the preset trigger condition is met is determined according to whether the user triggers push information, and the push page is displayed in a half-screen mode.

In the present embodiment, if the user's viewing operation on the historical push video a1 is detected, then a trailer link of the first push object b1 in the historical push video a1 is extracted as a first object identifier corresponding to the first push object, and then live video A1 corresponding to the historical push video a1 is entered. At this time, trailer links of all trailer push objects in A1 are recognized as second object identifiers, and the matching degree between the second object identifiers and the first object identifier is calculated. If a second object identifier completely matched with the first object identifier is acquired, then the corresponding candidate push object is determined as the second push object b1 matched with the first push object.

Thus, the push information c1 corresponding to the second push object b1 is displayed on the live interface of A1, and if it is detected that the user triggers the push information c1, then the push page corresponding to the second push object b1 is displayed in a half-screen mode on the current live interface of A1.

In one embodiment of the present disclosure, as shown in Fig. 9B, the historical viewed video is historical push video a2, which does not contain the trailer link of the first push object b1, and the preset similarity threshold is 100%. In the present embodiment, whether the preset trigger condition is met is determined according to whether the user triggers the push information, and the push page is displayed in a half-screen mode.

In the present embodiment, if the user's viewing operation on the historical push video a2 is detected, then a first image feature of the first push object b2 in the historical push video a2 is recognized, and then the live video a2 corresponding to the historical push video a1 is entered. At this time, the second image features of all push objects in A2 are recognized as the second image features, and the similarity degree between the second image features and the first image feature is calculated. If a second image feature completely consistent with the first image feature is acquired, then a corresponding candidate push object is determined as the second push object b2 similar to the first push object.

Thus, the push information c2 corresponding to the second push object b2 is displayed on a live interface of A1, and if it is detected that the user triggers the push information c2, then the push page corresponding to the second push object b2 is displayed in a half-screen mode on the current live interface of A2.

To sum up, according to the push processing method of the embodiment of the present disclosure, a different way can be flexibly selected according to the needs of the scene to determine the second push object matched with the first push object from the candidate push objects associated with the current live video, and then push the second push object associated with the first push object in the current live video. Since the second push object is matched with the first push object, an efficient continuity of a related push object from being determined to being pushed is realized.

In order to implement the above embodiments, the present disclosure also provides a push processing apparatus.

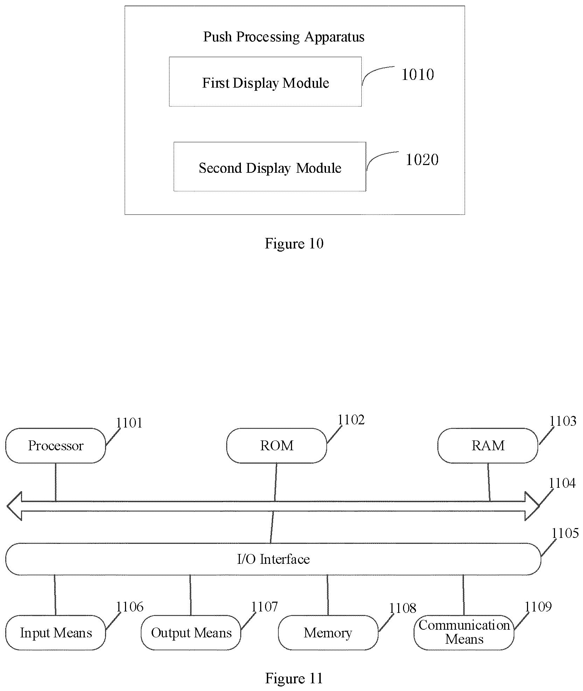

Fig. 10 is a schematic structural diagram of a push processing apparatus provided by an embodiment of the present disclosure, which can be implemented by software and/or hardware and can be generally integrated into an electronic device. As shown in Fig. 10, the apparatus includes: a first display module 1010 and a second display module 1020, wherein the first display module 1010 is used for displaying, when candidate push objects associated with a current live video include a second push object matched with a first push object, push information on a live interface of the current live video,
wherein, the push information is used for indicating that the second push object associated with the first push object is contained in the current live video, and the first push object is determined according to a historical viewed video;
the second display module 1020 is used for displaying, when the push information meets a preset trigger condition, a push page of the second push object on the live interface.

The push processing apparatus provided by the embodiment of the present disclosure can execute the push processing method provided by any embodiment of the present disclosure, and has corresponding functional modules for executing the method and beneficial effects, which are not described in detail here.

In order to implement the above embodiments, the present disclosure also provides a computer program product, including computer programs/instructions which, when executed by a processor, implement the push processing method in the above embodiments.

Fig. 11 is a schematic structural diagram of an electronic device provided by an embodiment of the present disclosure.

Referring specifically to Fig. 11, there is shown a schematic structural diagram of an electronic device 1100 adapted for implementing an embodiment of the present disclosure. The electronic device 1100 in the embodiment of the present disclosure can include, but is not limited to, a mobile terminal such as a mobile phone, a notebook computer, a digital broadcast receiver, a Personal Digital Assistant (PDA), a Tablet Computer (PAD), a Portable Multimedia Player (PMP), a vehicle-mounted terminal such as a vehicle-mounted navigation terminal, as well as a fixed terminal such as a digital TV and a desktop computer. The electronic device shown in Fig. 11 is just an example, and should not bring any limitation to the functions and application scope of the embodiment of the present disclosure.

As shown in Fig. 11, the electronic device 1100 can include a processor (such as a central processor, a graphics processor, etc.) 1101, which can execute various appropriate actions and processes according to a program stored in a Read-Only Memory (ROM) 1102 or a program loaded from a memory 1108 into a Random Access Memory (RAM) 1103. In the RAM 1103, various programs and data required for the operation of the electronic device 1100 are also stored. The processor 1101, the ROM 1102 and the RAM 1103 are connected to each other through a bus 1104. An input/output (I/O) interface 1105 is also connected to the bus 1104.

Generally, the following means can be connected to the I/O interface 1105: an input means 1106 including, for example, a touch screen, a touch pad, a keyboard, a mouse, a camera, a microphone, an accelerometer, a gyroscope, etc.; an output means 1107 including, for example, a liquid crystal display (LCD), a speaker, a vibrator, etc.; a memory 1108 including, for example, a magnetic tape, a hard disk, etc.; and a communication means 1109. The communication means 1109 can allow the electronic device 1100 to perform wireless or wired communication with other devices to exchange data. Although Fig. 11 shows the electronic device 1100 with various means, it should be understood that it is not required to implement or provide all the means shown. More or fewer means can alternatively be implemented or provided.

In particular, according to an embodiment of the present disclosure, the process described above with reference to the flow diagram can be implemented as a computer software program. For example, an embodiment of the present disclosure includes a computer program product including a computer program carried on a non-transitory computer readable medium, and the computer program contains program code for executing the method shown in the flow diagram. In such an embodiment, the computer program can be downloaded and installed from the network through the communication means 1109, or installed from the memory 1108 or from the ROM 1102. When the computer program is executed by the processor 1101, the above functions defined in the push processing method of the embodiments of the present disclosure are executed.

It should be noted that the computer readable medium mentioned above in the present disclosure can be a computer readable signal medium or a computer readable storage medium or any combination of the above. The computer readable storage medium can be, for example, but not limited to, an electrical, magnetic, optical, electromagnetic, infrared, or semiconductor system, apparatus or device, or any combination of the above. More specific examples of the computer readable storage medium can include, but are not limited to, an electrical connection with one or more wires, a portable computer disk, a hard disk, a Random Access Memory (RAM), a Read-Only Memory (ROM), an Erasable Programmable Read-Only Memory (EPROM or flash memory), an optical fiber, a portable Compact Disk Read-Only Memory (CD-ROM), an optical storage device, a magnetic storage device, or any suitable combination of the above. In the present disclosure, the computer readable storage medium can be any tangible medium containing or storing a program, which can be used by or in combination with an instruction execution system, apparatus or device. In the present disclosure, the computer readable signal medium can include a data signal propagated in baseband or as part of a carrier wave, in which computer readable program codes are carried. This propagated data signal can take many forms, including but not limited to an electromagnetic signal, an optical signal or any appropriate combination of the above. The computer readable signal medium can also be any computer readable medium other than the computer readable storage medium, which can send, propagate or transmit a program for use by or in connection with an instruction execution system, apparatus or device. The program codes contained in the computer readable medium can be transmitted by any appropriate medium, including but not limited to: wires, optical cables, RF (radio frequency) and the like, or any appropriate combination of the above.

In some embodiments, clients and servers can communicate by using any currently known or future developed network protocol such as the HyperText Transfer Protocol (HTTP), and can be interconnected with digital data communication in any form or medium (for example, a communication network). Examples of the communication network include a Local Area Network ("LAN"), a Wide Area Network ("WAN"), the Interconnected network (for example, the Internet) and end-to-end networks (for example, ad hoc end-to-end networks), as well as any currently known or future developed networks.

The above-mentioned computer readable medium can be contained in the above-mentioned electronic device, or can exist alone without being assembled into the electronic device.

The above-mentioned computer readable medium carries one or more programs which, when executed by the electronic device, cause the electronic device to: display, if candidate push objects associated with a current live video include a second push object matched with a first push object, push information on a live interface of the current live video, wherein, the push information is used for indicating that the second push object associated with the first push object is contained in the current live video, and the first push object is determined according to a historical viewed video; display, if the push information meets a preset trigger condition, a push page of the second push object on the live interface. Thus, after the first push object that the user is interested in is determined based on the historical viewed video, the second push object associated with the first push object is pushed in the current live video, which shortens the push path and realizes an efficient continuity of a related push object from being determined to being pushed.

Computer program codes for executing the operations of the present disclosure can be written in one or more programming languages or a combination thereof, including but not limited to object-oriented programming languages, such as Java, Smalltalk, C++, as well as conventional procedural programming languages, such as "C" language or similar programming languages. The program codes can be completely executed on the user's computer, partially executed on the user's computer, executed as an independent software package, partially executed on the user's computer and partially executed on a remote computer, or completely executed on the remote computer or a server. In the case involving a remote computer, the remote computer can be connected to a user's computer through any kind of network, including a Local Area Network (LAN) or a Wide Area Network (WAN), or can be connected to an external computer (for example, connected through the Internet using an Internet service provider).

The flow diagrams and block diagrams in the drawings illustrate the architecture, functions and operations of possible implementations of the system, method and computer program product according to various embodiments of the present disclosure. In this regard, each block in the flow diagrams or block diagrams can represent a module, a program segment, or a part of code that contains one or more executable instructions for implementing specified logical functions. It should also be noted that in some alternative implementations, the functions noted in the blocks can occur in a different order than those noted in the drawings. For example, two blocks shown in succession can actually be executed substantially in parallel, and they can sometimes be executed in the reverse order, depending on the functions involved. It is also to be noted that each block in the block diagrams and/or flow diagrams, and a combination of blocks in the block diagrams and/or flow diagrams, can be implemented by a dedicated hardware-based system that executes specified functions or operations, or by a combination of dedicated hardware and computer instructions.

The involved units described in the embodiments of the present disclosure can be implemented by software or hardware. The name of the unit does not constitute the limitation on the unit itself in some cases.

The functions described above herein can be at least partially executed by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine readable medium can be a tangible medium that can contain or store a program for use by or in connection with an instruction execution system, apparatus or device. The machine readable medium can be a machine readable signal medium or a machine readable storage medium. The machine readable medium can include, but is not limited to, an electronic, magnetic, optical, electromagnetic, infrared, or semiconductor system, apparatus, device, or any appropriate combination of the above. More specific examples of the machine readable storage medium can include an electrical connection based on one or more wires, a portable computer disk, a hard disk, a Random Access Memory (RAM), a Read-Only Memory (ROM), an Erasable Programmable Read-Only Memory (EPROM or flash memory), an optical fiber, a convenient Compact Disk Read-Only Memory (CD-ROM), an optical storage device, a magnetic storage device, or any appropriate combination of the above.

Compared with the related art, the technical solution provided by the embodiments of the present disclosure has the following advantages.

According to the push processing solution provided by the embodiments of the present disclosure, if candidate push objects associated with a current live video include a second push object matched with a first push object, then push information is displayed on a live interface of the current live video, wherein the push information is used for indicating that the current live video includes the second push object associated with the first push object, and the first push object is determined according to a historical viewed video; if the push information meets a preset trigger condition, then a push page of the second push object is displayed on the live interface. Thus, after the first push object that the user is interested in is determined based on the historical viewed video, the second push object associated with the first push object is pushed in the current live video, which shortens the push path and realizes an efficient continuity of a related push object from being determined to being pushed.

The above description is only the explanation of the preferred embodiments of the present disclosure and the applied technical principles. It should be understood by those skilled in the art that the disclosure scope involved in the present disclosure is not limited to the technical solution formed by the specific combination of the above technical features, but also covers other technical solution formed by any combination of the above technical features or their equivalent features without departing from the above disclosure concept, for example, a technical solution formed by a mutual replacement of the above features and technical features with similar functions as disclosed in the present disclosure (but not limited to).

Furthermore, although the operations are depicted in a particular order, this should not be understood as requiring that these operations be executed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of a separate embodiment can also be implemented in combination in a single embodiment. On the contrary, various features described in the context of a single embodiment can also be implemented in multiple embodiments individually or in any appropriate sub-combination.

Although the present subject matter has been described in a language specific to structural features and/or methodological logical actions, it should be understood that the subject matter defined in the appended Claims is not necessarily limited to the specific features or actions described above. On the contrary, the specific features and actions described above are only exemplary forms of implementing the Claims.

## Claims

1. A push processing method, comprising steps of:
if candidate push objects associated with a current live video includes a second push object matched with a first push object, displaying push information on a live interface of the current live video;
wherein the push information is used for indicating that the current live video includes the second push object associated with the first push object, and the first push object is determined according to a historical viewed video;
if the push information meets a preset trigger condition, displaying a push page of the second push object on the live interface.

2. The method according to Claim 1, wherein, if the historical viewed video comprises a historical live video, the first push object is determined according to the historical viewed video, which comprises:
measuring a playing duration of the historical live video;
if the playing duration is greater than a preset viewing duration, determining a historical push object corresponding to the historical live video as the first push object.

3. The method according to Claim 1, wherein, if the historical viewed video comprises a historical push video, the first push object is determined according to the historical viewed video, which comprises at least one of the following:
if the historical viewed video contains a historical push link of an associated historical push object and a trigger operation for the historical push link is acquired, determining the historical push object corresponding to the historical push video as the first push object;
if a display operation for a historical push page is acquired, determining a historical push object corresponding to the historical push video as the first push object, wherein the historical push page contains push detail information of the historical push object associated with the historical viewed video.

4. The method according to Claim 3, wherein, before if candidate push objects associated with a current live video include a second push object matched with a first push object, the method further comprises:
in response to a viewing operation on the historical push video, entering a current live video corresponding to the historical push video, wherein the historical push video is a traffic pulling video of the current live video.

5. The method according to Claim 1, wherein, the displaying, if candidate push objects associated with a current live video include a second push object matched with a first push object, push information on a live interface of the current live video, comprises:
determining whether a first object identifier corresponding to the first push object is acquired according to the historical viewed video where the first push object is located;
if the first object identifier is acquired, determining second object identifiers of the candidate push objects;
calculating matching degrees between the second object identifiers and the first object identifier;
if there is a second object identifier with the matching degree greater than a preset matching threshold, determining the candidate push object corresponding to the second object identifier with the matching degree greater than the preset matching threshold as the second push object matched with the first push object, and displaying the push information on the live interface of the current live video.

6. The method according to Claim 1, wherein, the displaying, if candidate push objects associated with a current live video include a second push object matched with a first push object, push information on a live interface of the current live video, comprises:
determining whether a first object identifier corresponding to the first push object is acquired according to the historical viewed video including the first push object;
if the first object identifier is not acquired, determining a first image feature of the first push object according to the historical viewed object where the first push object is located;
determining second image features of the candidate push objects;
calculating similarity degrees between the second image features and the first image feature;
if there is a second image feature with the similarity degree greater than a preset similarity threshold, determining the candidate push object corresponding to the second image feature with the similarity degree greater than the preset similarity threshold as the second push object matched with the first push object, and displaying the push information on the live interface of the current live video.

7. The method according to Claim 5 or 6, wherein the first object identifier comprises at least one of the following: an object name of the first push object, push link information of the first push object; the second object identifier comprises at least one of the following: an object name of the second push object, push link information of the second push object.

8. The method according to Claim 1, wherein the trigger condition comprises:
a display duration of the push information having reached a preset duration, and no trigger operation on the push information being detected; or,
a display duration of the push information having not reached a preset duration, and a trigger operation on the push information being detected; or,
a trigger operation on the push information being detected.

9. The method according to Claim 1, wherein,
the push page is an object detail page of the second push object; or the push page is a presentation page of a to-be-presented object corresponding to the current live video, wherein the presentation page comprises the second push object.

10. The method according to any one of Claims 1 to 9, further comprising:
displaying preset push tag information in an area on the push page where the second push object is located,
wherein the push tag information is used for identifying a historical browsing behavior on the first push object.

11. A push processing apparatus, comprising:
A first display module for displaying, if candidate push objects associated with a current live video include a second push object matched with a first push object, push information on a live interface of the current live video,
wherein the push information is used for indicating that the current live video includes the second push object associated with the first push object, and the first push object is determined according to a historical viewed video;
a second display module for displaying, if the push information meets a preset trigger condition, a push page of the second push object on the live interface.

12. An electronic device, comprising:
a processor;
a memory for storing instructions executable to the processor;
wherein the processor is used for reading the executable instructions from the memory and executing the executable instructions so as to implement the push processing method according to any one of Claims 1 to 10.

13. A computer readable storage medium storing a computer program which is used for executing the push processing method according to any one of Claims 1 to 10.

14. A computer program product comprising a computer program which, when executed by a processor, implements the push processing method according to any one of Claims 1 to 10.

15. A computer program, comprising:
instructions which, when executed by a processor, cause the processor to execute the push processing method according to any one of Claims 1 to 10.
